# EUROPÄISCHE PATENTSCHRIFT

(11) **EP 4 122 085 B1**
(45) Veröffentlichungstag und Bekanntmachung des Hinweises auf die Patenterteilung: **19.03.2025**
(21) Anmeldenummer: 21712071.6
(22) Anmeldetag: 10.03.2021
(51) Int. Cl.: H02K 11/215, H02K 29/08

(54) **ANTRIEBSMOTOR FÜR EIN SAUGGERÄT ODER EINE WERKZEUGMASCHINE**
DRIVE MOTOR FOR A VACUUM CLEANER OR A MACHINE TOOL
MOTEUR D'ENTRAÎNEMENT DESTINÉ À UN ASPIRATEUR OU UNE MACHINE-OUTIL

(30) Priorität: 18.03.2020 DE 102020107466
(43) Veröffentlichungstag der Anmeldung: 25.01.2023
(73) Patentinhaber: Festool GmbH, 73240 Wendlingen am Neckar (DE)
(72) Erfinder: SCHÖN, Patrick, 73240 Wendlingen (DE); WITH, Markus, 72636 Frickenhausen (DE)
(74) Vertreter: Patentanwälte Bregenzer und Reule Partnerschaftsgesellschaft mbB
(86) Internationale Anmeldenummer: PCT/EP2021/056020
(87) Internationale Veröffentlichungsnummer: WO 2021/185650

(56) Entgegenhaltungen:
- WO-A1-2011/159674
- DE-A1- 10 014 626
- JP-A- S63 262 055
- US-A- 4 230 976
- US-A- 5 864 192
- US-A1- 2017 141 708
- US-A1- 2019 140 532

## Beschreibung

Die Erfindung betrifft einen Antriebsmotor für ein Sauggerät oder eine Werkzeugmaschine in Gestalt einer Hand-Werkzeugmaschine oder einer halbstationären Werkzeugmaschine, wobei der Antriebsmotor einen Stator mit einer Statorspulenanordnung und einen Rotor mit einer Motorwelle aufweist, die an dem Stator oder bezüglich des Stators anhand einer Lageranordnung um eine Drehachse drehbar gelagert ist, wobei der Rotor eine Magnetanordnung mit ringförmig um die Drehachse angeordneten Permanentmagneten aufweist, wobei zur Erfassung einer jeweiligen Drehwinkelstellung des Rotors bezüglich des Stators eine Sensoranordnung bezüglich des Stators ortsfest angeordnet ist, die mindestens zwei Sensoren aufweist, die zur Erzeugung insbesondere digitaler Schaltsignale für eine Bestromungseinrichtung zur Bestromung der Statorspulenanordnung ausgestaltet sind, sodass der Rotor durch Bestromung der Statorspulenanordnung um die Drehachse dreh-antreibbar ist.

Ein derartiger Antriebsmotor ist beispielsweise in WO 2011/159674 A1 erläutert.

Ein derartiger Antriebsmotor ist beispielsweise ein sogenannter elektronisch kommutierter Motor oder EC-Motor. Zur Bestromung der Statorspulenanordnung des Motors ist eine Bestromungseinrichtung vorgesehen. Um eine korrekte Bestromung der Statorspulenanordnung zu ermöglichen, also insbesondere zu passenden Schaltzeitpunkten die Statorspulen zu bestromen, benötigt die Bestromungseinrichtung Informationen über die jeweilige Drehwinkelstellung des Rotors, wofür die Sensoranordnung vorgesehen ist. Allerdings ergeben sich bei dem Betrieb eines derartigen Antriebsmotors Störungseffekte dahingehend, durch beispielsweise Überlagerung der Magnetfelder der Permanentmagneten und Magnetfeldern, die durch die Statorspulenanordnung erzeugt werden, sodass die typischerweise zur Verfügung stehenden Schaltsignale der Sensoranordnung nicht optimal sind.

Es ist daher die Aufgabe der vorliegenden Erfindung, einen verbesserten Antriebsmotor, insbesondere verbesserten elektronisch kommutierten Antriebsmotor, bereitzustellen.

Zur Lösung der Aufgabe ist bei einem Antriebsmotor der eingangs genannten Art vorgesehen, dass die mindestens zwei Sensoren zur Erfassung zweier um einen Drehwinkel phasenverschobener Wellen eines magnetischen Drehfelds des Rotors ausgestaltet sind, wobei die Sensoren die Schaltsignale in Abhängigkeit davon erzeugen, dass eine den Sensor jeweils durchsetzende magnetische Welle des Drehfelds eine Schaltschwelle des Sensors überschreitet oder unterschreitet, und dass die Permanentmagneten der Magnetanordnung bezüglich der Drehachse Winkelabstände zueinander aufweisen, sodass die magnetischen Wellen des Drehfelds am Ort des jeweiligen Sensors kontinuierliche, insbesondere etwa sinusförmige, Halbwellen mit Scheitelbereichen zwischen kontinuierlich ansteigenden und abfallenden Flanken aufweisen, wobei die Wellen Übergangsabschnitte zwischen jeweils aufeinanderfolgenden Halbwellen unterschiedlicher Polarität aufweisen, wobei die Wellen in den Übergangsabschnitten mindestens eine Stufe oder einen Sprung oder eine Unstetigkeit aufweisen, und dass die Schaltschwellen der Sensoren im Bereich der kontinuierlich ansteigenden oder abfallenden Flanken der Halbwellen angeordnet sind.

Weiterhin sieht die Erfindung eine Werkzeugmaschine, insbesondere eine Hand-Werkzeugmaschine oder eine halbstationäre Werkzeugmaschine, mit einem Antriebsmotor gemäß der Erfindung vor. Die Werkzeugmaschine ist beispielsweise eine Sägemaschine, Bohrmaschine, Schraubmaschine oder dergleichen. Als halbstationäre Maschine wird beispielsweise eine mobile, an einen Anwendungsort, zum Beispiel auf eine Baustelle, transportable Maschine, insbesondere eine Tischkreissäge oder dergleichen, verstanden.

Es ist dabei ein Grundgedanke, dass die Sensoranordnung gerade nicht im Bereich der Übergangsabschnitte, wo Stufen, Sprünge oder dergleichen andere Unstetigkeit zu beobachten sind, sondern dass die Schaltschwellen außerhalb der Übergangsabschnitte liegen.

Der erfindungsgemäße Antriebsmotor ist z.B. ein bürstenloser Gleichstrommotor bzw. Brushless DC Motor) abgekürzt auch als BLDC- oder BL-Motor bezeichnet (BL = Brushless, DC = Direct Current / Gleichstrom). Der Antriebsmotor kann auch ein BLAC-Motor sein (BL = Brushless, AC = Alternating Current / Wechselstrom). Der Antriebsmotor kann auch ein elektronisch kommutierter (englisch Electronically Commutated) Motor (EC-Motor), ein Permanentmagnet-Synchronmotor (PMSM) oder dergleichen sein.

Eine jeweilige Hysterese eines Sensors ist vorzugsweise im Sinne der Erfindung so eingestellt, dass die Schaltschwellen der Sensoren im Bereich der kontinuierlich ansteigenden oder abfallenden Flanken der Halbwellen liegen.

Die Sensoranordnung weist vorteilhaft zur Ausgabe digitaler Schaltsignale ausgestaltete magnetische Sensoren oder Magnetfeldsensoren auf, beispielsweise Hall-Sensoren, magneto-resistive Sensoren (MR-Sensoren), insbesondere anisotropische MR-Sensoren oder AMR-Sensoren, GMR-Sensoren, magneto-optische Sensoren oder dergleichen.

Es ist möglich, dass beispielsweise eine Auswerteeinrichtung der Sensoranordnung aus einem analogen Messsignal eines Sensors ein digitales Schaltsignal erzeugt, in dem die Auswerteeinrichtung das analoge Messsignal mit der jeweiligen Schaltschwelle vergleicht. Vorzugsweise geben die Sensoren jedoch bereits digitale Schaltsignale aus. Dementsprechend ist es vorteilhaft, wenn die Schaltschwellen bei den Sensoren oder an den Sensoren vorgesehen und/oder eingestellt sind. Die Schaltschwellen bei den Sensoren oder an den Sensoren können auch beispielsweise voreingestellt sein und/oder durch Produktionsgenauigkeiten oder Produktionsbedingungen vorgegeben sein.

Zwar wäre es prinzipiell möglich, dass an dem Rotor ein sozusagen als Schaltmagnet oder Sensormagnet ausgestalteter Magnet vorhanden ist, der nicht zur Zusammenwirkung mit der Statorspulenanordnung im Sinne eines Drehantreibens des Rotors vorgesehen ist. Bevorzugt ist es jedoch, wenn der Rotor nur solche Magnete aufweist, die zum Drehantreiben des Rotors oder zu dessen Drehbetätigung vorgesehen sind. Die Permanentmagneten der Magnetanordnung dienen also vorzugsweise zum Drehantreiben des Rotors in Zusammenwirkung mit der Statorspulenanordnung oder sind dafür ausgestaltet und vorgesehen. Die ohnehin schon zum Drehantreiben des Rotors und somit des Antriebsmotors notwendigen Permanentmagneten werden also für einen weiteren Zweck verwendet, nämlich zu einer Betätigung der Sensoren der Sensoranordnung.

An dieser Stelle sei aber erwähnt, dass ohne weiteres mindestens ein weiterer Magnet oder Magnetgeber oder magnetischer Schaltgeber zusätzlich zu der für das Drehantreiben des Rotors vorgesehenen Permanentmagneten vorgesehen sein kann, dessen Magnetfeld von mindestens einem Sensor der Sensoranordnung abgetastet wird.

Bevorzugt ist es jedoch, wenn an dem Rotor kein ausschließlich zur Betätigung der Sensoranordnung vorgesehener und nicht zum Drehantreiben des Rotors vorgesehener magnetischer Geber oder Magnet angeordnet ist. An dem Rotor sind vorzugsweise ausschließlich die zum Drehantreiben des Rotors vorgesehenen Permanentmagneten der Magnetanordnung als permanentmagnetische Bauteile oder Permanentmagneten angeordnet.

Zwischen den Permanentmagneten der Magnetanordnung , insbesondere einander gegenüberliegender Seiten benachbarter Permanentmagnete, sind vorzugsweise Winkelabstände und/oder Lücken und/oder Zwischenräume bezüglich der Drehachse vorhanden. Die Winkelabstände bezüglich der Drehachse betragen beispielsweise mindestens 5°, vorzugsweise mindestens 10°, insbesondere mindestens 15° bezüglich der Drehachse. Mithin sind also quasi Lücken zwischen den Permanentmagneten vorhanden, was die Qualität des auf die Sensoranordnung einwirkenden Drehfeldes an sich negativ beeinflusst. Aufgrund der Schaltschwellen der Sensoren ist es jedoch möglich, dadurch bedingte Unstetigkeiten, Stufen oder Sprünge des magnetischen Drehfelds sozusagen zu eliminieren oder auszublenden.

Die Permanentmagnete sind vorzugsweise Platten, plattenförmig oder in der Art von Scheiben ausgestaltet.

Vorteilhaft ist es, wenn die Permanentmagneten und/oder der Rotor als Ganzes in Richtung der Sensoranordnung vor den Stator oder eine Stirnseite des Stators vorsteht. Dadurch kann das magnetische Feld der Permanentmagneten besser von den Sensoren erfasst werden.

Zwischen der Magnetanordnung und der Sensoranordnung, also beispielsweise einander zugewandten Seiten der Rotor-Permanentmagnete und der Sensoren, sind Mindestabständen vorteilhaft, beispielsweise ein Mindestabstand von mindestens 0,4 mm, bevorzugt mindestens 0,8 mm, insbesondere mindestens 1 mm. Der Nominal-Mindestabstand zwischen Magnetanordnung und Sensoranordnung beträgt beispielsweise 1 mm, wobei durch Toleranzen Abstände zwischen 0,4 mm und 1,6 mm möglich sind.

Es ist zwar möglich, dass die Sensoren der Sensoranordnung individuell oder einzeln an dem Stator oder bezüglich des Stators ortsfest angeordnet sind oder angeordnet werden. Bevorzugt ist es jedoch, wenn die Sensoren der Sensoranordnung an einem Sensorträger angeordnet sind, beispielsweise an einer Leiterplatte. Der Sensorträger weist vorzugsweise Formschlusskonturen zur formschlüssigen Befestigung an dem Stator, beispielsweise Formschlussvorsprünge, Formschlussaufnahmen oder dergleichen, auf und/oder ist kraftschlüssig am Stator befestigt, beispielsweise anhand einer Klemmeinrichtung.

Vorteilhaft ist insbesondere, wenn der Sensorträger zur Montage an einem Motordeckel oder zwischen einem Motordeckel und einem Stator-Blechpaket des Stators ausgestaltet ist. Der Motordeckel ist beispielsweise ein sogenanntes Motorschild. An dem Motordeckel kann beispielsweise eine Aufnahme für den Sensorträger vorgesehen sein, insbesondere eine Aufnahmevertiefung. Der Motordeckel weist beispielsweise ein Drehlager der Lageranordnung für die Motorwelle oder eine Lageraufnahme für ein Drehlager der Lageranordnung auf. Der Motordeckel kann auch den Sensorträger bilden, d. h. dass an dem Motordeckel die Sensoren angeordnet sind oder die Sensoranordnung angeordnet ist.

Vorteilhaft ist ferner vorgesehen, dass der Sensorträger mindestens eine Formschlusskontur zu einer Montage an dem Stator oder bezüglich des Stators derart aufweist, dass der Sensorträger an dem Stator oder bezüglich des Stators bezüglich der Drehachse des Antriebsmotors nur in einer einzigen Winkelposition oder nur in solchen Winkelpositionen montierbar ist, in denen zwischen jedem Sensor der Sensoranordnung und einer neben dem Sensor angeordneten Spule der Statorspulenanordnung ein vorbestimmter Winkelabstand vorgesehen ist. Es können also durchaus mehrere Winkelpositionen vorgesehen sein, in denen der Sensorträger oder die Sensoranordnung bezüglich der Drehachse an dem Stator anordenbar ist. Diese Winkelpositionen sind jedoch vorteilhaft vorbestimmte Winkelpositionen, in denen zwischen den Sensoren der Sensoranordnung und den Statorspulen vorbestimmte Winkelabstände bezüglich der Drehachse vorgesehen sind. Vorteilhaft beträgt der Winkelabstand Null.

Eine Gegen-Formschlusskontur zum Eingriff der Formschlusskontur des Sensorträgers kann am Stator und/oder einem Motordeckel angeordnet sein. Der Motordeckel ist vorzugsweise in einer einzigen Drehwinkelposition oder in vorbestimmten Drehwinkelpositionen am Stator befestigbar, sodass der am Motordeckel in einer vorbestimmten Winkelposition gehaltene Sensorträger in einer vorbestimmten Winkelposition bezüglich des Stators montierbar ist. Bevorzugt sind mehrere Formschlusskonturen und Gegen-Formschlusskonturen, die bezüglich der Drehachse des Antriebsmotors Winkelabstände zueinander aufweisen, insbesondere äquidistante Winkelabstände.

Vorteilhaft ist es, wenn mindestens ein Sensor, vorzugsweise jeder Sensor der Sensoranordnung, jeweils mittig bezüglich der Statorspule angeordnet ist, der der Sensor zugeordnet ist. Es ist aber auch vorteilhaft möglich, dass mindestens ein Sensor, vorzugsweise jeder Sensor der Sensoranordnung sozusagen in einer Zahnmiete angeordnet ist und/oder zwischen benachbarten Statorspulen mittig angeordnet ist.

Die Schaltschwellen können bei den jeweiligen Sensoren unmittelbar vorgesehen sein, sodass diese jeweils bei Überschreiten und/oder Unterschreiten einer Schaltschwelle den digitalen Wert ihres Sensorsignals oder Schaltsignals wechseln. Es ist aber auch möglich, dass die Auswerteeinrichtung bei Überschreiten und/oder Unterschreiten den Wert Sensorsignals oder Schaltsignals digital ändert.

Eine in der Praxis optimale Konfiguration sieht Schaltschwellen folgender Art vor:
Eine jeweilige Halbwelle des magnetischen Drehfelds durchläuft einen Phasenwinkelbereich von 180°, eine Vollwelle des magnetischen Drehfelds durchläuft dementsprechend einen Phasenwinkelbereich von 360°. Eine Vollwelle enthält zwei aufeinanderfolgende Halbwellen, nämlich eine positive und eine negative Halbwelle, oder Halbwellen mit einander entgegengesetzten Polaritäten, beispielsweise einer ersten und einer zweiten Polarität. Zwischen einer negativen und
einer positiven Halbwelle oder den Halbwellen mit unterschiedlichen Polaritäten ist sozusagen ein Nulldurchgang.

Bei einem Rotor mit der Polpaarzahl 1, also zwei magnetischen Polen, tritt eine Vollwelle des magnetischen Drehfelds an einem jeweiligen Sensor bei einer mechanischen Umdrehung des Rotors auf, bei einem Rotor mit Polpaarzahl zwei beispielsweise zweimal. Insoweit die Wellen des magnetischen Drehfelds nachfolgend beschrieben sind, sind sie mit elektrischen Winkeln beschrieben.

Die Schaltschwellen der Sensoren oder für die Sensoren sind vorteilhaft so gewählt, dass das Schaltsignal eines jeweiligen Sensors bei einem elektrischen Phasenwinkel von etwa 30° oder exakt 30° nach einem Übergang einer Welle des magnetischen Drehfelds von einer positiven Halbwelle zu einer negativen Halbwelle oder einer negativen Halbwelle zu einer positiven Halbwelle einen Schaltsignalwechsel aufweist. Anders ausgedrückt kann auch vorgesehen sein, dass die Schaltschwellen der Sensoren oder für die Sensoren so vorgesehen sind, dass das Schaltsignal eines jeweiligen Sensors bei einem Phasenwinkel von etwa 30° nach einem Übergang einer Welle des magnetischen Drehfelds von einer Halbwelle mit der ersten Polarität zu einer Halbwelle mit der zweiten Polarität einen Schaltsignalwechsel aufweist.

Ein Schaltsignalwechsel oder ein Wechsel des Schaltsignals ist dabei beispielsweise ein Wechsel von logisch Null zu logisch Eins oder umgekehrt. Gewisse Toleranzen bezüglich des Winkels von 30° sind möglich. Bevorzugt ist jedoch ein exakte Einstellung Schaltschwellen zur möglichst exakten Erzielung der Schaltsignalwechsel bei den Phasenwinkeln von 30° nach einem Übergang der Welle des magnetischen Drehfelds von einer ersten zu einer zweiten Polarität.

Durch oben genannten Schaltschwellen kann der Antriebsmotor ohne weiteres in einander entgegengesetzten Drehrichtungen betrieben werden.

Des Weiteren ist es aufgrund der Auswahl der Schaltschwellen bei exakt oder etwa 30° möglich, dass die Sensoranordnung bei mechanisch gleichem Aufbau des Antriebsmotors, jedoch unterschiedlicher Beschaltung der Statorspulenanordnung in Dreieckschaltung oder in Sternschaltung, ohne mechanische oder elektrische Modifikation betreibbar ist. Ferner ermöglicht die Auswahl der Schaltschwellen bei exakt oder etwa 30° auch unterschiedliche Wicklungsanordnungen und/oder unterschiedliche Verschaltungen der Statorspulenanordnung.

Vorteilhaft dient zur Einstellung des Phasenwinkels und/oder zur Einstellung der Schaltschwellen eine magnetische Hysterese eines jeweiligen Sensors, beispielsweise eines Hall-Sensors. Vorzugsweise ist vorgesehen, dass der Phasenwinkel von etwa 30° und/oder die Schaltschwellen anhand einer magnetischen Hysterese eines jeweiligen Sensors eingestellt ist.

Die Bestromungseinrichtung bildet vorzugsweise einen Bestandteil des Antriebsmotors. Der Antriebsmotor und die Bestromungseinrichtung können auch ein System bilden. Insbesondere weist eine Werkzeugmaschine der eingangs genannten Art, zum Beispiel eine Hand-Werkzeugmaschine oder eine halbstationäre Werkzeugmaschine, den Antriebsmotor sowie eine Bestromungseinrichtung auf. Die Statorspulenanordnung kann beispielsweise in einer Dreieckschaltung oder einer Sternschaltung verschaltet und/oder mit der Bestromungseinrichtung verbunden sein.

Die Bestromungseinrichtung ist vorzugsweise zu einer Block-Bestromung der Statorspulenanordnung ausgestaltet. Die Bestromungseinrichtung weist vorzugsweise eine Brückenschaltung zur Bestromung der Statorspulenanordnung auf.

Bevorzugt weist die Bestromungseinrichtung eine Kommutierungstabelle für eine Dreieckschaltung der Statorspulenanordnung und eine Kommutierungstabelle für eine Sternschaltung der Statorspulenanordnung auf. Die Kommutierungstabellen können beispielsweise in einem Speicher der Bestromungseinrichtung gespeichert sein. Ein Programmmodul der Bestromungseinrichtung kann zum Zugriff auf die für die Sternschaltung oder die Dreieckschaltung jeweils geeignete Kommutierungstabelle parametrierbar sein.

Bevorzugt ist es, wenn die Dreieckschaltung bei einer Stromversorgung des Antriebsmotors über einen mobilen Energiespeicher, beispielsweise einen Batteriepack oder Akkupack erfolgt. Bevorzugt ist also insbesondere eine Werkzeugmaschine mit einem erfindungsgemäßen Antriebsmotor, dessen Statorspulenanordnung eine Dreieckschaltung aufweist und mit einer Bestromungseinrichtung verbunden ist, die über einen elektrischen Energiespeicher mit Strom versorgt wird. Die Werkzeugmaschine weist also beispielsweise einen Versorgungsanschluss zur lösbaren Anordnung des elektrischen Energiespeichers auf. Der Energiespeicher stellt beispielsweise als Versorgungsspannung für die Bestromungseinrichtung und somit den Antriebsmotor eine Gleichspannung von 10,8 V, 12 V, 14 V, 18 V, 36 V oder dergleichen bereit. Mithin stellt der Energiespeicher vorteilhaft hohe Ströme bei vergleichsweise niedriger Versorgungsspannung bereit. Die Werkzeugmaschine ist vorteilhaft eine Schraubmaschine oder ein Schraubgerät.

Die Sternschaltung ist bevorzugt bei einer Stromversorgung des Antriebsmotors über ein elektrisches Wechselspannungsnetz mit beispielsweise 120 V, 230 V oder dergleichen. Das Wechselspannungsnetz liefert verhältnismäßig eine verhältnismäßig hohe Versorgungspannung, sodass die Bestromungseinrichtung kleinere Ströme aus dem Wechselspannungsnetz bezieht. Der Antriebsmotor mit einer Statorspulenanordnung, die in Sternschaltung geschaltet und mit einer Bestromungseinrichtung verbunden ist, vorteilhaft einen Bestandteil einer Werkzeugmaschine mit einem Versorgungsanschluss für ein elektrisches Wechselspannungsnetz. Beispielsweise hat die Werkzeugmaschine ein Anschlusskabel zum Anschließen an das Wechselspannungsnetz und/oder einen Steckanschluss zum Anschließen eines Anschlusskabels für das Wechselspannungsnetz.

Anhand der Schaltsignale der Sensoranordnung kann die Bestromungseinrichtung die Statorspulenanordnung im Sinne einer neutralen Kommutierung, prinzipiell aber auch im Sinne einer Vorkommutierung oder Nachkommutierung ansteuern.

Eine neutrale Kommutierung sieht vor, dass die Spannungen der Statorspulen derart eingestellt werden, dass das durch die Statorspulen erzeugte magnetische Drehfeld mit der Rotorlage oder Drehwinkelposition des Rotors synchron ist oder übereinstimmt.

Eine Vorkommutierung sieht vor, dass die Spannungen der Statorspulen derart eingestellt werden, dass das durch die Statorspulen erzeugte magnetische Drehfeld der Rotorlage oder Drehwinkelposition des Rotors vorauseilt oder vorangeht.

Eine Nachkommutierung sieht dementsprechend vor, dass die Spannungen der Statorspulen derart eingestellt werden, dass das durch die Statorspulen erzeugte magnetische Drehfeld der Rotorlage oder Drehwinkelposition des Rotors nachläuft.

Ein bevorzugtes Konzept sieht vor, dass die Sensoranordnung die Schaltsignale bei einer Dreieckschaltung der Statorspulenanordnung im Sinne einer neutralen Kommutierung erzeugt. Vorteilhaft ist vorgesehen, dass die Sensoranordnung derart bezüglich des Stators angeordnet ist, dass die Sensoren die Schaltsignale bei einer Dreieckschaltung der Statorspulenanordnung im Sinne einer neutralen Kommutierung erzeugen. Insbesondere ist diese Ausgestaltung bei einer Stromversorgung des Antriebsmotors oder der Werkzeugmaschine über einen Energiespeicher vorteilhaft, der vorzugsweise eine Gleichspannung in einem Bereich von 12 bis 48 V bereitstellt. Vorteilhaft ist diese Ausgestaltung insbesondere bei einer Verwendung des Antriebsmotors in einer Werkzeugmaschine, bei ein hohes Anlaufdrehmoment gewünscht ist, beispielsweise bei einer Ausgestaltung der Werkzeugmaschine als Schraubmaschine.

Die neutrale Kommutierung ist insbesondere dadurch bewirkt, dass die Schaltschwellen der Sensoren so eingerichtet sind, dass die Sensoren bei einem Phasenwinkel von etwa 30° vor und nach einem Nulldurchgang einer Welle des magnetischen Drehfelds einen Schaltsignalwechsel ausgeben.

Ferner ist es möglich, dass die Sensoranordnung die Schaltsignale bei einer Sternschaltung der Statorspulenanordnung im Sinne einer Vorkommutierung erzeugt. Vorteilhaft ist, dass die Sensoranordnung derart bezüglich des Stators angeordnet ist, dass die Sensoren die Schaltsignale bei einer Sternschaltung der Statorspulenanordnung im Sinne einer Vorkommutierung erzeugen. Insbesondere ist diese Ausgestaltung vorteilhaft bei einer Werkzeugmaschine, die zur elektrischen Stromversorgung über ein elektrisches Wechselspannungsnetz vorgesehen ist und einen dafür geeigneten Versorgungsanschluss aufweist. Beispielsweise handelt es sich bei dieser Werkzeugmaschine um eine Sägemaschine, bei der ein geringeres Anlaufdrehmoment des Antriebsmotors akzeptabel ist, weil zunächst das Arbeitswerkzeug, beispielsweise Sägeblatt, auf eine vorbestimmte Drehzahl gebracht wird, bevor das Arbeitswerkzeug in das Werkstück eingreift oder einschneidet. Die Vorkommutierung entspricht vorzugsweise elektrisch etwa 30°.

Es ist aber auch möglich, dass die Sensoranordnung derart bezüglich des Stators angeordnet ist, dass die Sensoren die Schaltsignale bei einer Sternschaltung der Statorspulenanordnung im Sinne einer neutralen Kommutierung erzeugen, während bei einer Dreieckschaltung die Schaltsignale im Sinne einer Nachkommutierung oder Vorkommutierung erzeugt werden.

Es ist möglich, dass die von den Sensoren gemessenen Wellen nur solche sind, die von den Permanentmagneten erzeugt sind. In der Praxis gibt es jedoch Überlagerungseffekte durch das magnetische Drehfeld, welches durch die Statorspulenanordnung erzeugt ist. Das von den Sensoren gemessene oder auf die Sensoren einwirkende magnetische Drehfeld enthält z.B. ein magnetisches Teil-Feld, welches durch die Statorspulenanordnung erzeugt ist, und ein magnetisches Teil-Feld, welches durch die Permanentmagneten erzeugt ist, wobei die Teil-Felder einander überlagert sind.

Der Rotor und/oder der Stator weisen vorzugsweise Blechpakete auf. Die Blechpakete des Rotors und/oder des Stators sind vorzugsweise aus geschichteten Elektroblechen oder Trafoblechen hergestellt.

Die Motorwelle durchsetzt z.B. eine Wellendurchtrittsöffnung eines Blechpakets, das an der Motorwelle gehalten ist.

Nachfolgend wird ein Ausführungsbeispiel der Erfindung anhand der Zeichnung erläutert. Auch wenn das Ausführungsbeispiel einen zweipoligen Rotor darstellt, bedeutet dies keine Einschränkung der Anwendung der Erfindung. Ohne weiteres lässt sich das Prinzip auch bei weitere Pole aufweisenden, beispielsweise vierpoligen oder sechspoligen, Rotoren oder Rotoren mit einer anderen Magnetanordnung realisieren. Auch die Statorspulenanordnung kann modifiziert werden. Ebenso kann die Statorspulenanordnung des nachfolgenden Ausführungsbeispiels auch anders als in Dreieckschaltung oder Sternschaltung beschaltet oder verschaltet sein, beispielsweise Kombinationen aus Sternschaltung und Dreieckschaltung, Reihenschaltungen oder Parallelschaltungen oder dergleichen.

Es zeigen:

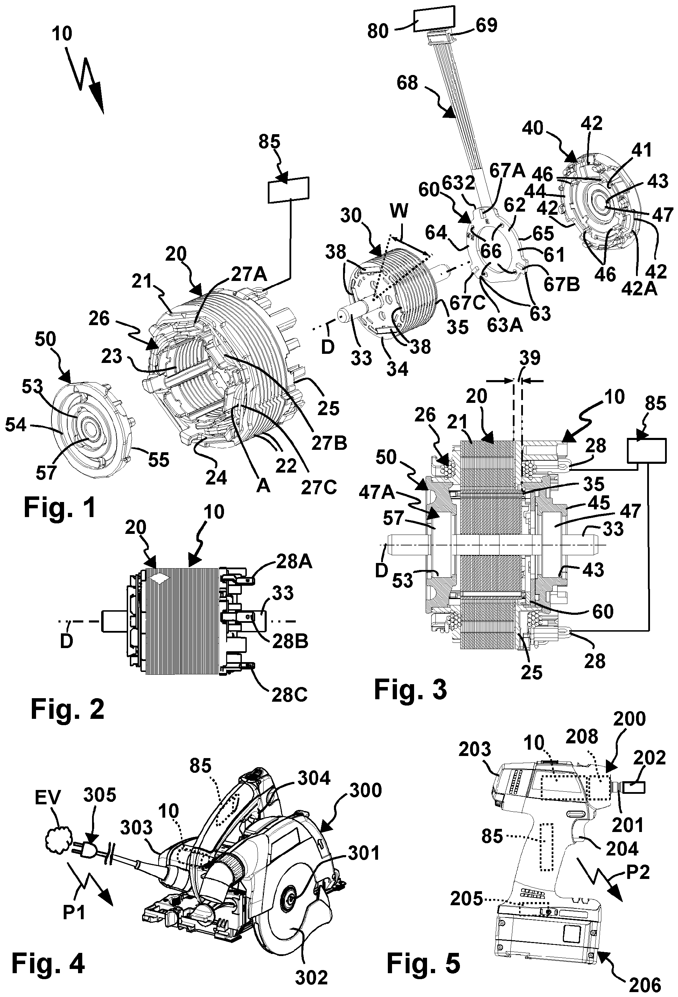

- Figur 1: eine Explosionsdarstellung eines Antriebsmotors, der in
- Figur 2: von der Seite dargestellt ist,
- Figur 3: einen Längsschnitt durch den Antriebsmotor gemäß vorstehender Figuren,
- Figur 4: eine Hand-Werkzeugmaschine mit einem Antriebsmotor gemäß vorstehender Figuren in Gestalt einer Netz-Maschine,
- Figur 5: eine Hand-Werkzeugmaschine in Gestalt einer mit einem mobilen Energiespeicher betriebenen Hand-Werkzeugmaschine, sowie einem Antriebsmotor gemäß Figuren 1-3,

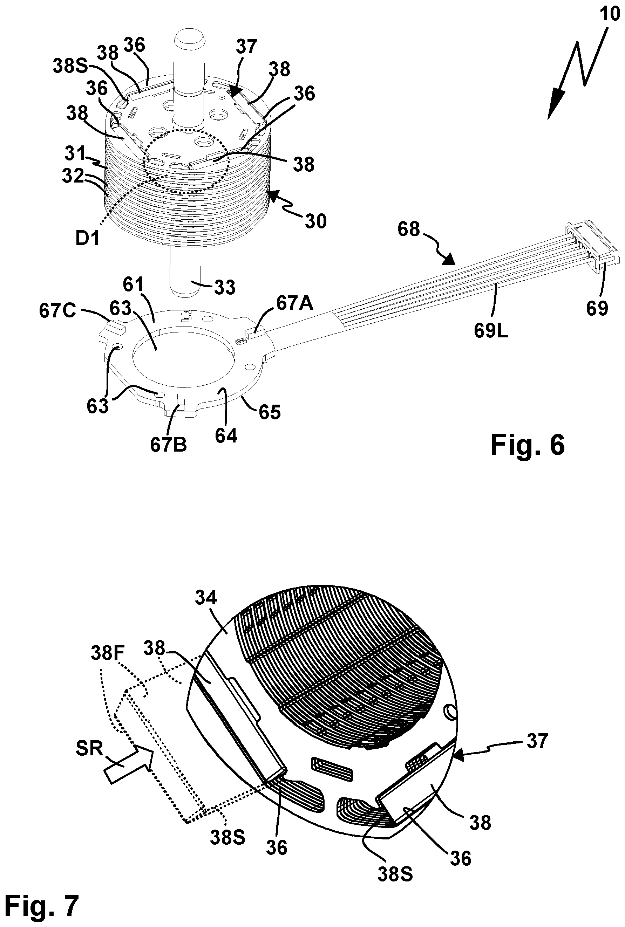

- Figur 6: eine Explosionsdarstellung eines Rotors sowie einer Sensoranordnung des Antriebsmotors gemäß vorstehender Figuren,
- Figur 7: ein Detail des Rotors sowie von Permanentmagneten an dem Rotor, etwa entsprechend einem Ausschnitt D1 in Figur 6,
- Figur 8: ein Schaltbild des Antriebsmotors sowie seiner Bestromungseinrichtung,
- Figur 9: eine schematische Frontalansicht des Antriebsmotors sowie der Sensoranordnung,
- Figur 10: ein Verlauf von durch die Sensoranordnung des Antriebsmotors nach Figur 9 messbarer magnetischer Felder,
- Figur 11: eine schematische Darstellung von Schaltsignalen der Sensoranordnung des Antriebsmotors gemäß vorstehender Figuren,
- Figur 12: eine Kommutierungstabelle für eine Statorspulenanordnung des Antriebsmotors gemäß vorstehender Figuren, die in Sternschaltung mit der Bestromungseinrichtung verbunden ist,
- Figur 13: eine Kommutierungstabelle für eine Statorspulenanordnung des Antriebsmotors gemäß vorstehender Figuren, die in Dreieckschaltung mit der Bestromungseinrichtung ist,
- Figur 14: Strangspannungen der Statorspulenanordnung in Sternschaltung, die einer Gegen-EMK (EMK = elektromotorische Kraft) entsprechen,
- Figur 15: durch die Bestromungseinrichtung des Antriebsmotors an der Statorspulenanordnung in Sternschaltung entsprechend Figur 14 eingestellte Block-Spannungsverläufe synoptisch mit idealen Spannungsverläufen, und
- Figur 16: Verläufe einer Gegen-EMK der Statorspulenanordnung in Dreieckschaltung und einen einzelnen beispielhaften Block-Spannungsverlauf.

Ein Antriebsmotor 10 weist einen Stator 20 auf, an dem ein Rotor 30 um eine Drehachse D drehbar gelagert ist. Der Stator 20 weist ein Stator-Blechpaket 21 mit Blechen 22 auf. Das Blechpaket 21 hat eine Aufnahme 23, in der der Rotor 30 aufgenommen ist. An einander entgegengesetzten Stirnseiten 24 und 25 sind Motordeckel 50 und 40 angeordnet, die die Aufnahme 23 verschließen.

Weiterhin trägt der Stator 20 eine Statorspulenanordnung 26 mit Statorspulen 27A, 27B und 27C.

Der Rotor 30 weist ein Rotor-Blechpaket 31 auf, welches in der Aufnahme 23 aufgenommen ist. Das Blechpaket 31 weist Bleche 32 auf, die aufeinander geschichtet sind. Das Blechpaket 31 wird von einer Motorwelle 33 durchdrungen, die anhand einer Lageranordnung 47A bezüglich des Stators 20 um die Drehachse D drehbar gelagert ist. Stirnseiten 34 und 35 des Rotors 30 liegen den Motordeckeln 50 und 40 gegenüber.

An dem Rotor-Blechpaket 31 sind Magnetaufnahmen 36 für Permanentmagnete 38 einer Magnetanordnung 37 vorgesehen. Die Permanentmagnete 38 sind beispielsweise anhand einer Steckmontage mit einer Kraftrichtung SR in die Magnetaufnahmen 36 eingesteckt.

Die Permanentmagnete 38 sind plattenartig ausgestaltet und weisen beispielsweise Flachseiten 38F auf, zwischen denen sich Schmalseiten 38S erstrecken. Mit ihren Schmalseiten 38S sind die Permanentmagnete 38 nebeneinander angeordnet, so dass eine ringförmige Konfiguration gebildet ist.

Allerdings sind zwischen den Permanentmagneten 38 Winkelabstände W vorhanden. In den Winkelabstände W befindet sich kein Permanentmagnet.

Die Flachseiten 38F stehen beispielsweise orthogonal zu Radiuslinien, die sich von der Drehachse D weg erstrecken.

Die Motordeckel 40, 50 weisen Lageraufnahmen 43, 53 auf, in denen Drehlager 47, 57 der Lageranordnung 47A aufgenommen sind und die die Motorwelle 33 drehbar lagern. Bei den Drehlagern 47, 57 handelt es sich beispielsweise um Wälzlager, insbesondere Kugellager. Die Motorwelle 33 steht beispielsweise an einer oder zwei Seiten vor den Stator 30 bzw. die Motordeckel 40, 50 vor, beim Ausführungsbeispiel sogar an zwei Seiten, nämlich an Stirnseiten oder Frontseiten 45, 54 des Motordeckels 40, 50. Stirnseiten 44 und 55 der Motordeckel 40 und 50 sind dem Stator 20 zugewandt und verschließen diesen stirnseitig.

Die Statorspulenanordnung 26 ist anhand von Anschlüssen 28A, 28B, 28C, die mit den Statorspulen 27A, 27B, 27C verbunden sind, mit einer Bestromungseinrichtung 85 verbunden.

Die Bestromungseinrichtung 85 bestromt die Statorspulen 27 derart, dass ein Drehfeld entsteht, welches in Wechselwirkung mit der Magnetanordnung 37 den Rotor 30 rotatorisch um die Drehachse D antreibt.

Die Bestromungseinrichtung 85 weist beispielsweise eine Steuerung 80 auf, mit der eine Brückenschaltung 86 ansteuerbar ist. Die Brückenschaltung 86 umfasst obere Schalter SA1, SB1, SC1 und untere Schalter SA2, SB2, SC2, wobei die oberen Schalter SA1, SB1, SC1 mit einem Versorgungspotenzial V1 und die unteren Schalter SA2, SB2, SC2 mit einem Potential V0, beispielsweise Masse, verbunden sind. Zwischen die jeweiligen oberen und unteren Schalter SA1, SA2 oder SB1, SB2, oder SC1 und SC2 ist jeweils eine Anschlussleitung LA, LB und LC geschaltet, die mit den Anschlüssen 28A-28C verbunden ist.

Um die Statorspulen 27 optimal anzusteuern, benötigt die Steuerung 80 eine Information über die jeweilige Drehposition des Rotors 30 bezüglich des Stators 20 bezogen auf die Drehachse D. Hierfür ist eine Sensoranordnung 60 vorgesehen. Die Sensoranordnung 60 umfasst einen Sensorträger 61, beispielsweise eine Leiterplatte 62, die bezüglich des Stators 20 ortsfest ist. Beispielsweise ist der Sensorträger 61 am Motordeckel 40 und/oder zwischen dem Motordeckel 40 und dem Stator 20 sandwichartig gehalten.

Der Sensorträger 61 ist in einer Aufnahme 41 des Motordeckels 40 aufgenommen. Dieser weist an seinem radialen Außenumfang Formschlussaufnahmen 42, also Gegen-Formschlusskonturen 42A auf, in die Formschlussvorsprünge 63, also Formschlusskonturen 63A, des Sensorträgers 61 eingreifen. Die Formschlussvorsprünge sind beispielsweise sternartig ausgestaltet, so dass sie in die dazu komplementären Formschlussaufnahmen 42 formschlüssig passen. Dadurch ist der Sensorträger 61 verdrehfest bezüglich der Drehachse D in der Aufnahme 41 gehalten.

Für eine weitere verdrehfeste Halterung sorgen weitere Formschlusskonturen, nämlich beispielsweise Formschlussaufnahmen 66 in Gestalt von Steckaufnahmen, in die Formschlussvorsprünge 46, die vom Motordeckel 40 in Richtung der Aufnahme 41 abstehen, also Gegen-Formschlusskonturen, eingreifen. Die Formschlussvorsprünge 63 und Formschlussaufnahmen 66 sind winkelbeabstandet bezüglich der Drehachse D, ebenso die dazu komplementären und diese Formschlüsse haltenden Formschlussaufnahmen 42 und Formschlussvorsprünge 46 des Motordeckels 40.

Die Stirnseite 35 des Rotors 30 steht vor die Stirnseite 25 des Stators 20 um ein vorbestimmtes Maß 39 vor, so dass das Magnetfeld und somit das magnetische Feld der Permanentmagnete 38 Sensoren 67A, 67B und 67C der Sensoranordnung 60 besser durchsetzen können.

Die Sensoren 67A, 67B und 67C sind vorteilhaft an der dem Rotor 30 zugewandten Stirnseite 64 des Sensorträgers 61 angeordnet. Dort können auch andere elektrische Komponenten, beispielsweise Widerstände und dergleichen angeordnet sein. Die Sensoren 67 sind beispielsweise Hall-Sensoren, die voreingestellte oder einstellbare Schaltschwellen aufweisen. Es ist aber auch möglich, dass die Sensoren 67 Sensoren sind, die analoge Messsignale entsprechend dem auf sie einwirkenden magnetischen Feld erzeugen, welche dann von einer Auswerteeinrichtung 70, beispielsweis einer Schwellwertschaltung, der Sensoranordnung 60 ausgewertet werden.

Die Sensoranordnung 60 weist eine Anschlusseinrichtung 68 zum Anschluss an die Steuerung 80 auf. Die Anschlusseinrichtung 68 umfasst beispielsweise einen Stecker 69, der über Leitungen 69L mit dem Sensorträger 61 und den daran angeordneten elektrischen Komponenten, beispielsweise den Sensoren 67, verbunden ist. Die Leitungen 69L ermöglichen dementsprechend die Übertragung von Schaltsignalen SA, SB und SC der Sensoren 67A, 67B, 67C oder der Auswerteeinrichtung 70. Wie erwähnt, ist es möglich, dass bereits die Sensoren 67A, 67B, 67C digitale Schaltsignale erzeugen. Es ist aber auch möglich, dass die Auswerteeinrichtung 70 die digitalen Schaltsignale SA, SB und SC anhand von analogen Messsignalen oder Sensorsignalen der Sensoren 67A, 67B, 67C erzeugen kann. Grundsätzlich denkbar ist es aber auch, dass die Sensoren 67A, 67B, 67C analoge Messsignale an die Steuerung 80 übermitteln, welche daraus die digitalen Schaltsignale 67A, 67B, 67C erzeugt. Die Steuerung 80 bildet somit sozusagen eine Auswerteeinrichtung der Sensoranordnung 60 oder einen Bestandteil der Sensoranordnung 60.

Die Steuerung 80 umfasst einen Prozessor 81, der mit einem Speicher 82 kommuniziert, in welchem ein Steuerungsprogramm 83 zur Ansteuerung der Bestromungseinrichtung 85 gespeichert ist. Die Bestromungseinrichtung 85, insbesondere die Brückenschaltung 86, stellt eine Leistungselektronik dar, die von der Steuerung 80 über eine Schnittstelle 84 ansteuerbar ist. Bei den Schaltern SA1-SC2 handelt es beispielsweise um Leistungstransistoren etc. Das ist an sich bekannt.

Die Statorspulenanordnung 26 kann beispielsweise in einer Dreieckschaltung mit der Bestromungseinrichtung 85 verbunden sein. Dann sind die Statorspulen 27 mit 27Ad, 27Bd und 27Cd bezeichnet. In der in gestrichelter Darstellung dargestellten Sternschaltung hingegen sind die Statorspulen 27 mit 27As, 27Bs und 27Cs bezeichnet.

Die Dreieckschaltung ist beispielsweise für eine Hand-Werkzeugmaschine 80 vorteilhaft, die durch einen elektrischen Energiespeicher 206, beispielsweise einen Akkupack, mit einer elektrischen Versorgungsspannung P2 versorgbar ist.

Die Sternschaltung hingegen eignet sich z.B. für eine Werkzeugmaschine 300, beispielsweise eine Kreissäge, die von einem elektrischen Energieversorgungsnetz EV mit einer Versorgungsspannung P1 versorgbar ist.

Die Hand-Werkzeugmaschinen 200, 300 weisen Gehäuse 203, 303 auf, in denen jeweils ein Antriebsmotor 10 zum Antrieben einer Werkzeugaufnahme 201, 301 angeordnet ist. Die Werkzeugaufnahme 201, 301 dient zur lösbaren Befestigung eines Arbeitswerkzeuges 202, 302, beispielsweise eines Bohrwerkzeugs oder Schraubwerkzeugs 202 oder eines Sägewerkzeugs 302.

Anhand eines Schalters 204 oder 304 sind Bestromungseinrichtungen 85 der Hand-Werkzeugmaschinen 200 und 300 aktivierbar, um den Antriebsmotor 10 einzuschalten oder auszuschalten und/oder dessen Drehzahl und/oder dessen Leistung zu ändern.

Die Hand-Werkzeugmaschine 200, beispielswiese ein Schraubgerät oder Bohrgerät, weist einen Versorgungsanschluss 205 für den Energiespeicher 206 auf, beispielsweise mit Steckkontakten, einer Steckschnittstelle oder dergleichen.

Die Hand-Werkzeugmaschine 300 hingegen weist einen Versorgungsanschluss 305, beispielsweise ein Netzkabel mit Netzstecker, zum Einstecken in eine Anschlusseinrichtung, die mit dem Versorgungsnetz EV verbunden ist, auf.

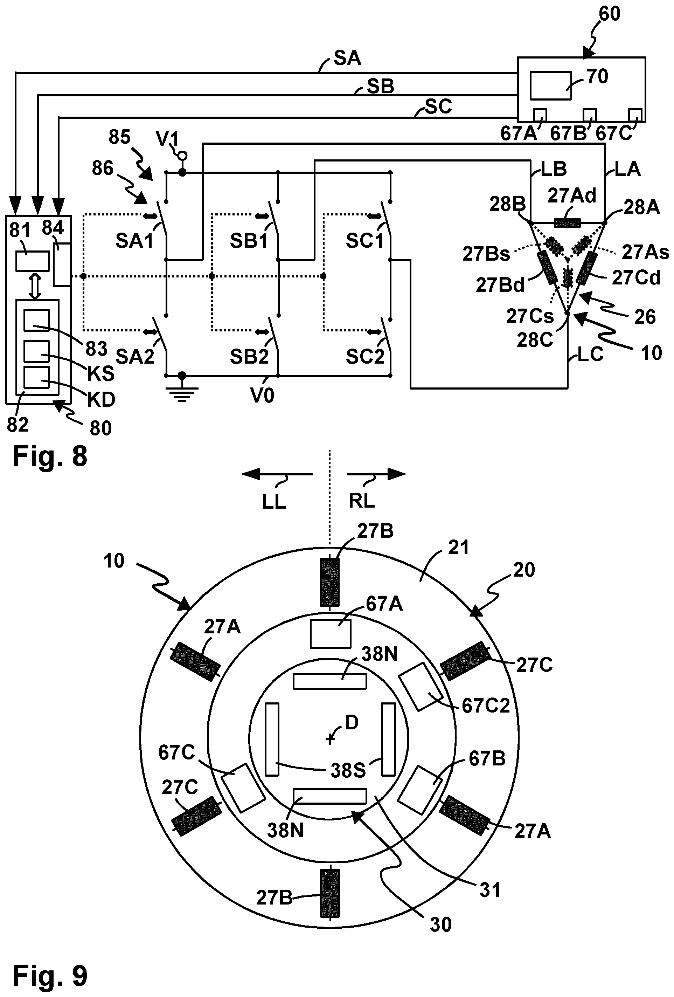

In Figur 9 ist der Antriebsmotor 10 schematisch dargestellt. Man erkennt, dass den Statorspulen 27A, 27B und 27C sozusagen polmittig jeweils ein Sensor 27A, 27B und 27C zugeordnet ist.

Die Statorspulenanordnung 26 ist mehrphasig, beispielsweise dreiphasig, beschaltet.

Der Rotor 30 ist beispielsweise ein zweipoliger Rotor, wobei jeweils einander gegenüberliegende Permanentmagnete 38 eine gleiche Polarität nach radial außen bezüglich der Drehachse D, also in Richtung eines Luftspalt zwischen Rotor 30 und Stator 20, aufweisen, während um 90 Grad bezüglich der Drehachse D winkelversetzte Permanentmagnete 38 eine dazu entgegengesetzte Polarität aufweisen, was durch die Bezugszeichen 38S (z.B. magnetischer Südpol) und 38N (z.B. magnetischer Nordpol) bei den Permanentmagneten 38 in Figur 9 angedeutet ist.

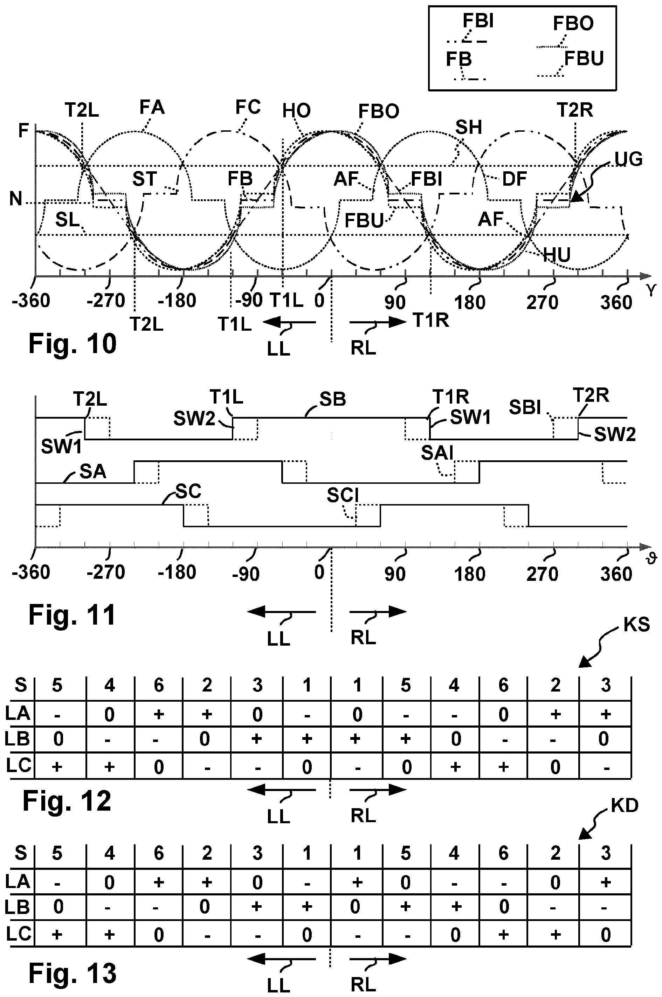

In Figur 10 sind magnetische Feldverläufe dargestellt, nämlich ein idealer Feldverlauf FBI, der quasi sinusförmig von einer Nulllage (Phasenwinkel γ = 0) ausgeht. Ausgehend von dieser Nulllage ist ein Rechtslauf RL und ein Linkslauf LL des Antriebsmotors 10 bzw. der daraus sich ergebende zeitliche Verlauf von Wellen des magnetischen Drehfelds dargestellt. Das Drehfeld ist für einen am Stator 20 befindlichen, ortsfesten Beobachter, in diesem Falle den jeweiligen Sensor 67, nach einer Drehung von γ = X° und bezogen auf die Polpaarzahl des Rotors 30, dargestellt.

Der ideale Feldverlauf FBI ist bei einem sozusagen idealen Rotor 30 gegeben, bei dem die Permanentmagnete 38 unmittelbar nebeneinander angeordnet sind, also keine Winkelabstände aufweisen und/oder kein Einfluss durch das von der Statorspulenanordnung 26 ausgehende Drehfeld vorhanden ist. Bei idealen Wellen, z.B. in der Art der Welle FBI, des magnetischen Drehfelds, die Sensoren 67A, 67B und 67C quasi ideale Schaltsignale SAI, SBI und SCI jeweils am Nulldurchgang der idealen Wellen des magnetischen Drehfelds schalten, also bei einer Schaltschwelle N oder einem Nulldurchgang N gemäß Figur 10.

Allerdings haben magnetische Sensoren, beispielsweise Hall-Sensoren, eine sogenannte Hysterese. Diese wird, wie nachfolgend deutlicher wird, optimal eingestellt und genutzt, indem bei den Sensoren 67 oder der Auswerteeinrichtung 70 eine obere Schaltschwelle SH und eine untere Schaltschwelle SL eingestellt ist. Die oberen und unteren Schaltschwellen SH und SL sind symmetrisch.

Durch die Winkelabstände zwischen den Permanentmagneten 38 hingegen ergibt sich ein realer Verlauf der Wellen des magnetischen Drehfelds, das von den Sensoren 67 erfasst werden, beispielsweise reale Verläufe der Drehfelder FA, FB und FC, welche von den Sensoren 67A, 67B, 67C erfasst werden oder auf diese einwirkt.

Dazu kommen jedoch noch Einflüsse durch die Bestromung der Statorspulen 27A-27C bzw. des dadurch erzeugten Feldes, so dass die Wellen des magnetischen Drehfelds, das von den Sensoren 67A, 67B, 67C erfasst wird, auch maximale oder minimale Verläufe haben können. Z.B. sind maximale und minimale Verläufe FBO und FBU des magnetischen Drehfelds möglich, das auf den Sensor 67B einwirkt.

Zwischen kontinuierlich ansteigenden Flanken AF oder kontinuierlich abfallenden Flanken DF von oberen und unteren Halbwellen HO und HU des Drehfelds FA, FB, FC sind Übergangsabschnitte UG mit Stufen ST, bei denen die Wellen des magnetischen Drehfelds FB nicht stetig sind. Dieser sozusagen indifferente Bereich oder die Übergangsabschnitte UG werden durch obere und untere Schaltschwellen SH und SL der Sensoren 67A, 67B, 67C sozusagen ausgeblendet. Dementsprechend sind die obere Schaltschwelle SH und die untere Schaltschwelle SL ausgewählt und/oder ausgelegt.

Am Beispiel des Sensors 67B soll dies nachfolgend deutlicher werden:
Bei einer Rechtslauf RL des Rotors 30 ausgehend vom Phasenwinkel γ = 0° weist das magnetische Drehfeld, welches auf den Sensor 67B einwirkt und/oder von diesem erfasst wird, zunächst eine positive oder obere Halbwelle HO auf und wechselt an der Schaltschwelle N oder dem Nulldurchgang N seine Polarität und wird zu einer unteren Halbwelle HU. Zu einem Zeitpunkt T1R durchläuft die untere Halbwelle HU die untere Schaltschwelle SL, was zu einem Umschalten des Sensors 67B führt, also zu einem Schaltsignalwechsel SW1, beispielsweise einem Wechsel von logisch Eins auf logisch Null.

Nachdem das Drehfeld FB bei einem Phasenwinkel γ = 180° sein sozusagen unteres Maximum durchlaufen hat, geht die untere Halbwelle HU bei einem Phasenwinkel von γ = 270° in eine obere Halbwelle HO über und überschreitet zu einem Zeitpunkt T2R die obere Schaltschwelle SH, sodass der Sensor 67B sozusagen wieder umgeschaltet wird und einen Schaltsignalwechsel SW2, beispielsweise von logisch Null auf logisch eins, erzeugt.

Beim Linkslauf LL des Rotors 30 funktioniert dieses Schema ebenfalls: wiederum ausgehend von der positiven oder obere Halbwelle HO beim Phasenwinkel γ = 0° geht das Drehfeld FB in die negative Halbwelle HU über und unterschreitet zu einem Zeitpunkt T1L die untere Schaltschwelle SL, sodass der Sensor 67B den Pegel des Schaltsignals SB von logisch eins auf logisch Null wechselt, also einen Schaltsignalwechsel SW2 durchführt.

Beim weiteren Linkslauf LL des Rotors 30 durchläuft das Drehfeld FB zunächst ein Minimum und steigt wieder an und durchläuft die Schaltschwelle N oder dem Nulldurchgang N und anschließend, bei einem Phasenwinkel von γ = -300°, die obere Schaltschwelle SH, was zu einem Schaltsignalwechsel SW1 zu einem Zeitpunkt T2L führt.

In Figur 12 ist eine beispielhafte Kommutierungstabelle KS für eine Bestromung der Statorspulenanordnung 26 in Sternschaltung dargestellt. In Figur 13 ist eine beispielhafte Kommutierungstabelle KD für eine Bestromung in Dreieckschaltung dargestellt. Die Kommutierungstabellen KS und KD sind beispielsweise im Speicher 82 der Steuerung 80 gespeichert und können vom Programm 83 wahlweise genutzt werden, um die Brückenschaltung 86 anzusteuern, wobei das Programm 83 die Kommutierungstabelle KS für die Statorspulenanordnung 26 in Sternschaltung und die Kommutierungstabelle KD für die Statorspulenanordnung 26 in Dreieckschaltung nutzt.

In beiden Kommutierungstabellen KS und KD sind Sektoren S mit Werten 1 bis 6 angegeben, die sich durch eine binäre Addition der Signalpegel der Schaltsignale SA, SB und SC ergeben, wobei das Schaltsignal SA mit der binären Wertigkeit 1, das Schaltsignal SB mit den binären Wertigkeit 2 und das Schaltsignal SC mit der binären Wertigkeit 4 in den jeweiligen Wert 1 bis 6 der Sektoren S eingehen.

In der jeweils linken Spalte der Kommutierungstabellen KS und KD sind weiterhin die elektrischen Potenziale, die die Bestromungseinrichtung 26 an den Anschlussleitung LA, LB und LC für die Statorspulenanordnung 26 bereitstellt, mit LA, LB und LC bezeichnet. In den Kommutierungstabellen KS und KD steht "+" dafür, dass eine jeweilige Anschlussleitung LA, LB und LC mit dem Versorgungspotenzial V1 verbunden ist, und "-" steht dafür, dass eine jeweilige Anschlussleitung LA, LB und LC mit dem Potential V0, beispielsweise Masse, verbunden ist. Wenn die jeweilige Anschlussleitung LA, LB und LC mit keinem der Potenziale V1 oder V0 verbunden ist, ist in der Kommutierungstabelle KS oder KD jeweils "0" angegeben.

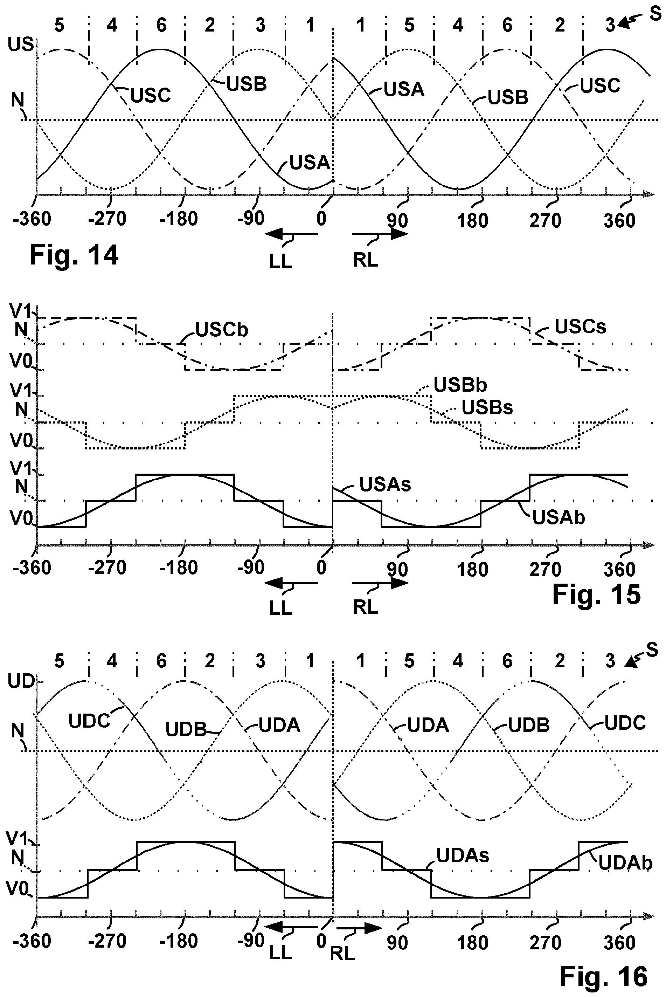

In Figur 14 ist die an den in Sternschaltung geschalteten Statorspulen 27As, 27Bs und 27Cs anliegende Gegen-EMK in Gestalt von Spannungen USA, USB und USC (EMK = elektromotorische Kraft) oder auf Englisch der BEMF (= back electromotive force) angegeben, die sich bei einer Drehung des Rotors 30 einstellen. Im Idealfall sind diesen Spannungen USA, USB und USC entsprechende Spannungen USAs, USBs und USCs, wie z.B. in Figur 15 dargestellt, durch die Bestromungseinrichtung 85 einstellbar. Ideal sind sozusagen sinusförmige durch die Bestromungseinrichtung 85 eingestellte und an den Statorspulen 27As, 27Bs und 27Cs anliegende Spannungen USAs, USBs und USCs. Allerdings führt die Bestromungseinrichtung 85 in der Praxis vorteilhaft eine Block-Bestromung durch, stellt also zum Beispiel die Spannungen an den Statorspulen 27As, 27Bs und 27Cs als Block-Spannungsverläufe USAb, USBb und USCb ein, sodass sich die Spannungen USAs, USBs und USCs sozusagen näherungsweise ergeben. Das Schaltschema zur Erzeugung der Block-Strangspannungen USAb, USBb und USCb ist durch die Kommutierungstabellen KS vorgegeben. Die Sektoren S mit Werten 1 bis 6 sind synoptisch eingeblendet. Man erkennt dabei, dass bei Sternschaltung eine Vorkommutierung stattfindet.

In Figur 16 sind die an den in Dreieckschaltung geschalteten Statorspulen 27Ad, 27Bd und 27Cd anliegenden Gegen-EMK Spannungen UDA, UDB und UDC dargestellt, die sich bei einer Drehung des Rotors 30 einstellen. Wiederum entsprechen diese Spannungen UDA, UDB und UDC sozusagen im Idealfall denjenigen Spannungen, die die Bestromungseinrichtung 85 idealerweise als gestellte Spannungsverläufe einstellen würde, also eine durch die Bestromungseinrichtung 85 an der Statorspule 27Ad eingestellte Spannung UDAs der Spannung UDA. Wie bereits im Zusammenhang mit der Sternschaltung und den Figuren 14 und 15 erläutert, stellt die Bestromungseinrichtung 85 anhand der Kommutierungstabelle KD jedoch Block-Spannungen ein, so zum Beispiel eine Block-Spannung UDAb. Die weiteren Block-Dreieck-Spannungen, welche die Bestromungseinrichtung 85 an den Statorspulen 27Bd und 27Cd anhand der Kommutierungstabelle einstellt, sind aus Gründen der Vereinfachung in Figur 16 nicht eingeblendet, die Sektoren S mit Werten 1 bis 6 sind jedoch eingeblendet. Es wird ersichtlich, dass bei Dreieckschaltung eine sozusagen ideale oder neutrale Kommutierung stattfindet. Zu den jeweiligen Schaltzeitpunkten oder Kommutierungszeitpunkten liegt an den Statorspulen 27Ad, 27Bd und 27Cd maximale Spannung an, was zu einem hohen Drehmoment und somit einer hohen Leistungsabgabe des Antriebsmotors zehn führt. Insbesondere bei Schraubgeräten, die mit einem hohen Anlaufdrehmoment schon aus dem Stillstand heraus arbeiten sollen, ist daher eine ideale Kommutierung oder neutrale Kommutierung realisierbar.

## Patentansprüche

1. Antriebsmotor für ein Sauggerät oder eine Werkzeugmaschine in Gestalt einer Hand-Werkzeugmaschine (200, 300) oder einer halbstationären Werkzeugmaschine, wobei der Antriebsmotor (10) einen Stator (20) mit einer Statorspulenanordnung (26) und einen Rotor (30) mit einer Motorwelle (33) aufweist, die an dem Stator (20) oder bezüglich des Stators anhand einer Lageranordnung (47) um eine Drehachse (D) drehbar gelagert ist, wobei der Rotor (30) eine Magnetanordnung (37) mit ringförmig um die Drehachse (D) angeordneten Permanentmagneten (38) aufweist, wobei zur Erfassung einer jeweiligen Drehwinkelstellung des Rotors (30) bezüglich des Stators (20) eine Sensoranordnung (60) bezüglich des Stators (20) ortsfest angeordnet ist, die mindestens zwei Sensoren aufweist, die zur Erzeugung insbesondere digitaler Schaltsignale (SA, SB, SC) für eine Bestromungseinrichtung (85) zur Bestromung der Statorspulenanordnung (26) ausgestaltet sind, sodass der Rotor (30) durch Bestromung der Statorspulenanordnung (26) um die Drehachse (D) dreh-antreibbar ist, **dadurch gekennzeichnet, dass** die mindestens zwei Sensoren (67A, 67b, 67C) zur Erfassung zweier um einen Drehwinkel phasenverschobener Wellen eines magnetischen Drehfelds (FB) des Rotors (30) ausgestaltet sind, wobei die Sensoren (67A, 67b, 67C) die Schaltsignale (SA, SB, SC) in Abhängigkeit davon erzeugen, dass eine den Sensor (67A, 67b, 67C) jeweils durchsetzende Welle des magnetischen Drehfelds (FB) eine Schaltschwelle (SH, SL) des Sensors (67A, 67b, 67C) überschreitet oder unterschreitet, und dass die Permanentmagneten (38) der Magnetanordnung (37) bezüglich der Drehachse (D) Winkelabstände zueinander aufweisen, sodass die Wellen des magnetischen Drehfelds (FB) am Ort des jeweiligen Sensors (67A, 67b, 67C) kontinuierliche, insbesondere etwa sinusförmige, Halbwellen (HO, HU) mit Scheitelbereichen zwischen kontinuierlich ansteigenden und abfallenden Flanken (AF, DF) aufweisen, wobei die Wellen Übergangsabschnitte (UG) zwischen jeweils aufeinanderfolgenden Halbwellen (HO, HU) unterschiedlicher Polarität aufweisen, wobei die Wellen in den Übergangsabschnitten (UG) mindestens eine Stufe (ST) oder einen Sprung oder eine Unstetigkeit aufweisen, und dass die Schaltschwellen (SH, SL) der Sensoren (67A, 67b, 67C) im Bereich der kontinuierlich ansteigenden oder abfallenden Flanken (AF, DF) der Halbwellen (HO, HU) angeordnet sind.

2. Antriebsmotor nach Anspruch 1, **dadurch gekennzeichnet, dass** die Permanentmagneten (38) der Magnetanordnung (37) zum Drehantreiben des Rotors (30) in Zusammenwirkung mit der Statorspulenanordnung (26) vorgesehen und ausgestaltet ist.

3. Antriebsmotor nach Anspruch 1 oder 2, **dadurch gekennzeichnet, dass** an dem Rotor (30) kein ausschließlich zur Betätigung der Sensoranordnung (60) vorgesehener Magnetgeber und/oder ausschließlich die zum Drehantreiben des Rotors (30) vorgesehenen Permanentmagneten (38) der Magnetanordnung (37) als permanentmagnetische (38) Bauteile oder Permanentmagneten (38) angeordnet sind.

4. Antriebsmotor nach einem der vorhergehenden Ansprüche, **dadurch gekennzeichnet, dass** zwischen einander gegenüberliegenden Seiten benachbarter Permanentmagnete (38) der Magnetanordnung (37) Winkelabstände, insbesondere Winkelabstände von mindestens 5°, vorzugsweise mindestens 10°, insbesondere mindestens 15° bezüglich der Drehachse, vorhanden sind.

5. Antriebsmotor nach einem der vorhergehenden Ansprüche, **dadurch gekennzeichnet, dass** die Magnetanordnung (37), insbesondere der Rotor (30) als Ganzes, vor den Stator (20) in Richtung der Sensoranordnung (60) vorsteht und/oder dass zwischen der Magnetanordnung (37) und der Sensoranordnung (60) ein Abstand von mindestens 0,4 mm, insbesondere mindestens 0,8 mm, bevorzugt mindestens 1 mm, vorgesehen ist.

6. Antriebsmotor nach einem der vorhergehenden Ansprüche, **dadurch gekennzeichnet, dass** die Sensoranordnung (60) einen Sensorträger (61), insbesondere in Gestalt einer Leiterplatte (62), aufweist, an dem die Sensoren (67A, 67b, 67C) angeordnet sind.

7. Antriebsmotor nach Anspruch 6, **dadurch gekennzeichnet, dass** der Sensorträger (61) zur Montage an einem Motordeckel (50) oder zwischen einem Motordeckel (50) und einem Stator-Blechpaket (21) des Stators (20) ausgestaltet ist oder der Motordeckel (50) den Sensorträger (61) bildet und/oder dass der Sensorträger (61) mindestens eine Formschlusskontur (63A) zu einer Montage an dem Stator (20) oder bezüglich des Stators (20) derart aufweist, dass der Sensorträger (61) bezüglich des Stators (20) bezüglich der Drehachse (D) des Antriebsmotors (10) nur in einer einzigen Winkelposition oder nur in solchen Winkelpositionen montierbar ist, in denen zwischen jedem Sensor (67A, 67b, 67C) der Sensoranordnung (60) und einer neben dem Sensor (67A, 67b, 67C) angeordneten Spule (26A, 26B, 26C) der Statorspulen ein vorbestimmter Winkelabstand vorgesehen ist.

8. Antriebsmotor nach einem der vorhergehenden Ansprüche, **dadurch gekennzeichnet, dass** mindestens ein Sensor (67A, 67b, 67C) oder jeder Sensor (67A, 67b, 67C) der Sensoranordnung (60) jeweils mittig zwischen benachbarten Statorspulen (27A, 27B, 27C) oder mittig bezüglich der Statorspule (27A, 27B, 27C) angeordnet ist, der der Sensor (67A, 67b, 67C) zugeordnet ist.

9. Antriebsmotor nach einem der vorhergehenden Ansprüche, **dadurch gekennzeichnet, dass** eine Vollwelle des magnetischen Drehfelds (FB) Halbwellen (HO, HU) unterschiedlicher Polarität umfasst, die jeweils einen Phasenwinkel von 180° durchlaufen, und dass die Schaltschwellen (SH, SL) derart vorgesehen sind, dass das Schaltsignal (SA, SB, SC) eines jeweiligen Sensors (67A, 67b, 67C) bei einem Phasenwinkel von etwa 30° nach einem Übergang einer Welle des magnetischen Drehfelds (FB) von einer Halbwelle (HO, HU) der einen Polarität zu einer Halbwelle (HO, HU) der anderen Polarität einen Schaltsignalwechsel (SW1, SW2) aufweist.

10. Antriebsmotor nach einem der vorhergehenden Ansprüche, **dadurch gekennzeichnet, dass** der Phasenwinkel von etwa 30° und/oder die Schaltschwellen (SH, SL) anhand einer magnetischen Hysterese eines jeweiligen Sensors (67A, 67b, 67C) eingestellt ist.

11. Antriebsmotor (10) nach einem der vorhergehenden Ansprüche, **dadurch gekennzeichnet, dass** die Sensoranordnung (60) derart bezüglich des Stators (20) angeordnet ist, dass die Sensoren (67A, 67b, 67C) die Schaltsignale (SA, SB, SC) bei einer Dreieckschaltung der Statorspulenanordnung (26) im Sinne einer neutralen Kommutierung erzeugen, wobei vorteilhaft vorgesehen ist, dass die neutrale Kommutierung dadurch bewirkt ist, dass die Schaltschwellen der Sensoren (67A, 67b, 67C) so eingerichtet sind, dass die Sensoren (67A, 67b, 67C) bei einem Phasenwinkel von etwa 30° vor und/oder nach einem Nulldurchgang einer Welle des magnetischen Drehfelds (FB) einen Schaltsignalwechsel (SW1, SW2) ausgeben.

12. Antriebsmotor nach einem der vorhergehenden Ansprüche, **dadurch gekennzeichnet, dass** die Sensoranordnung (60) derart bezüglich des Stators (20) angeordnet ist, dass die Sensoren (67A, 67b, 67C) die Schaltsignale (SA, SB, SC) bei einer Sternschaltung der Statorspulenanordnung (26) im Sinne einer Vorkommutierung erzeugen, wobei vorteilhaft vorgesehen ist, dass die Vorkommutierung elektrisch exakt oder etwa 30° entspricht.

13. Antriebsmotor nach einem der vorhergehenden Ansprüche, **dadurch gekennzeichnet, dass** die Bestromungseinrichtung (85) eine Kommutierungstabelle für die Statorspulenanordnung (26) in Dreieckschaltung und/oder eine Kommutierungstabelle für die Statorspulenanordnung (26) in Sternschaltung aufweist oder wahlweise mit Kommutierungstabellen für Dreieckschaltung und Sternschaltung parametrierbar ist.

14. Antriebsmotor nach einem der vorhergehenden Ansprüche, **dadurch gekennzeichnet, dass** das auf die Sensoren (67A, 67b, 67C) einwirkende magnetische Drehfeld (FB) ein magnetisches Teil-Feld, welches durch die Statorspulenanordnung (26) erzeugt ist, und ein magnetisches Teil-Feld enthält, welches durch die Permanentmagneten (38) erzeugt ist, wobei die Teil-Felder einander überlagert sind.

15. Werkzeugmaschine, insbesondere Hand-Werkzeugmaschine (200, 300) oder halbstationäre Werkzeugmaschine, mit einem Antriebsmotor (10) nach einem der vorhergehenden Ansprüche und einer Bestromungseinrichtung (85) zur Bestromung des Antriebsmotors, wobei vorteilhaft vorgesehen ist, dass die Statorspulenanordnung (26) des Antriebsmotors (10) in einer Dreieckschaltung mit der Bestromungseinrichtung (85) verbunden ist und die Werkzeugmaschine einen Versorgungsanschluss (205) zum Anschließen eines elektrischen Gleichspannung-Energiespeichers (206) aufweist oder dass die Statorspulenanordnung (26) des Antriebsmotors (10) in einer Sternschaltung mit der Bestromungseinrichtung (85) verbunden ist und die Werkzeugmaschine einen Versorgungsanschluss (305) für ein elektrisches Wechselspannungsnetz (305) aufweist.

## Claims

1. A drive motor for a vacuum cleaner or a machine tool, in the form of a hand-held machine tool (200, 300) or a semi-stationary machine tool, wherein the drive motor (10) comprises a stator (20) with a stator coil arrangement (26), and a rotor (30) with a motor shaft (33) which is mounted on the stator (20) or with respect to the stator using a bearing arrangement (47), so as to be able to rotate about an axis of rotation (D), wherein the rotor (30) comprises a magnet arrangement (37) with permanent magnets (38) arranged annularly about the axis of rotation (D), wherein a sensor arrangement (60) is arranged in a stationary manner with respect to the stator (20) in order to detect a respective angle of rotation position of the rotor (30) with respect to the stator (20), said sensor arrangement comprising at least two sensors which are configured to generate, in particular, digital switching signals (SA, SB, SC) for an energization device (85) for energizing the stator coil arrangement (26) so that the rotor (30) can be driven in rotation about the axis of rotation (D) through energization of the stator coil arrangement (26), **characterized in that** the at least two sensors (67A, 67b, 67C) are configured to detect two waves of a magnetic rotating field (FB) of the rotor (30), said waves being phase-shifted about an angle of rotation, wherein the sensors (67A, 67b, 67C) generate the switching signals (SA, SB, SC) in a manner dependent on a wave of the magnetic rotating field (FB) exceeding or undershooting a switching threshold (SH, SL) of the sensor (67A, 67b, 67C), said wave respectively passing through the sensor (67A, 67b, 67C), and **in that** the permanent magnets (38) of the magnet arrangement (37) comprise angular spacings from one another with respect to the axis of rotation (D), so that the waves of the magnetic rotating field (FB) comprise, at the location of the respective sensor (67A, 67b, 67C), continuous, in particular approximately sinusoidal, half-waves (HO, HU) with vertices between continuously rising and falling edges (AF, DF), wherein the waves in the transition sections (UG) between respectively successive half-waves (HO, HU) comprise a different polarity, wherein the waves in the transition sections (UG) comprise at least one step (ST) or a jump or an unevenness, and **in that** the switching thresholds (SH, SL) of the sensors (67A, 67b, 67C) are arranged in the region of the continuously rising or falling edges (AF, DF) of the half-waves (HO, HU).

2. The drive motor according to claim 1, **characterized in that** the permanent magnets (38) of the magnet arrangement (37) are provided and configured for driving in rotation of the rotor (30) in cooperation with the stator coil arrangement (26).

3. The drive motor according to claim 1 or 2, **characterized in that** no magnetic encoder provided exclusively for actuating the sensor arrangement (60) and/or permanent magnets (38) of the magnet arrangement (37) provided exclusively for the driving in rotation of the rotor (30) is/are arranged on the rotor (30) as permanent magnetic (38) components or permanent magnets (38).

4. The drive motor according to any one of the preceding claims, **characterized in that**, between mutually facing sides of adjacent permanent magnets (38) of the magnet arrangement (37), there are angular spacings, in particular angular spacings of at least 5°, preferably at least 10°, in particular at least 15° with respect to the axis of rotation.

5. The drive motor according to any one of the preceding claims, **characterized in that** the magnet arrangement (37), in particular the rotor (30) as a whole, protrudes in front of the stator (20) in the direction of the sensor arrangement (60) and/or **in that**, between the magnet arrangement (37) and the sensor arrangement (60), a spacing of at least 0.4 mm, in particular at least 0.8 mm, preferably at least 1 mm is provided.

6. The drive motor according to any one of the preceding claims, **characterized in that** the sensor arrangement (60) comprises a sensor support (61), in particular in the form of a circuit board (62), on which the sensors (67A, 67b, 67C) are arranged.

7. The drive motor according to claim 6, **characterized in that** the sensor support (61) is configured to be mounted on a motor cover (50) or between a motor cover (50) and a stator sheet stack (21) of the stator (20) or the motor cover (50) forms the sensor support (61) and/or **in that** the sensor support (61) comprises at least one positive locking contour (63A) for mounting on the stator (20) or with respect to the stator (20), in such a manner that the sensor support (61) with respect to the stator (20) can be mounted in only one angular position with respect to the axis of rotation (D) of the drive motor (10) or only in such angular positions in which, between each sensor (67A, 67b, 67C) of the sensor arrangement (60) and a coil (26A, 26B, 26C) of the stator coils which is arranged next to the sensor (67A, 67b, 67C), a predetermined angular spacing is provided.

8. The drive motor according to any one of the preceding claims, **characterized in that** at least one sensor (67A, 67b, 67C) or each sensor (67A, 67b, 67C) of the sensor arrangement (60) in each case is arranged centrally between adjacent stator coils (27A, 27B, 27C) or centrally with respect to the stator coil (27A, 27B, 27C) which is associated with the sensor (67A, 67b, 67C).

9. The drive motor according to any one of the preceding claims, **characterized in that** a full-wave of the magnetic rotating field (FB) includes half-waves (HO, HU) of different polarity, which each pass through a phase angle of 180°, and **in that** the switching thresholds (SH, SL) are provided in such a manner that the switching signal (SA, SB, SC) of a respective sensor (67A, 67b, 67C) at a phase angle of approximately 30° after a transition of a wave of the magnetic rotating field (FB) from a half-wave (HO, HU) of one polarity to a half-wave (HO, HU) of the other polarity comprises a switching signal change (SW1, SW2).

10. The drive motor according to any one of the preceding claims, **characterized in that** the phase angle of approximately 30° and/or the switching thresholds (SH, SL) are set using a magnetic hysteresis of a respective sensor (67A, 67b, 67C).

11. The drive motor (10) according to any one of the preceding claims, **characterized in that** the sensor arrangement (60) is arranged with respect to the stator (20) in such a manner that the sensors (67A, 67b, 67C) generate the switching signals (SA, SB, SC) in a delta connection of the stator coil arrangement (26) for the purpose of a neutral commutation, wherein it is advantageously provided that the neutral commutation is brought about **in that** the switching thresholds of the sensors (67A, 67b, 67C) are set up so that the sensors (67A, 67b, 67C) at a phase angle of approximately 30° before and/or after a zero-crossing of a wave of the magnetic rotating field (FB) output a switching signal change (SW1, SW2).

12. The drive motor according to any one of the preceding claims, **characterized in that** the sensor arrangement (60) is arranged with respect to the stator (20) in such a manner that the sensors (67A, 67b, 67C) generate the switching signals (SA, SB, SC) in a star connection of the stator coil arrangement (26) for the purpose of a precommutation, wherein it is advantageously provided that the precommutation is electrically exact or corresponds to approximately 30°.

13. The drive motor according to any one of the preceding claims, **characterized in that** the energization device (85) comprises a commutation table for the stator coil arrangement (26) in a delta connection and/or a commutation table for the stator coil arrangement (26) in a star connection or alternatively can be parametrized with commutation tables for a delta connection and a star connection.

14. The drive motor according to any one of the preceding claims, **characterized in that** the magnetic rotating field (FB) acting on the sensors (67A, 67b, 67C) contains a magnetic subfield which is generated by the stator coil arrangement (26) and contains a magnetic subfield which is generated by the permanent magnets (38), wherein the subfields overlap one another.

15. A machine tool, in particular a hand-held machine tool (200, 300) or a semi-stationary machine tool, with a drive motor (10) according to any one of the preceding claims or an energization device (85) for the energization of the drive motor, wherein it is advantageously provided that the stator coil arrangement (26) of the drive motor (10) is connected in a delta connection to the energization device (85), and the machine tool comprises a supply connection (205) for connecting an electric DC voltage energy storage (206), or in that the stator coil arrangement (26) of the drive motor (10) is connected in a star connection to the energization device (85), and the machine tool comprises a supply connection (305) for an electric AC voltage network (305).

## Revendications

1. Moteur d'entraînement pour un aspirateur ou une machine-outil sous la forme d'une machine-outil manuelle (200, 300) ou d'une machine-outil semi-stationnaire, dans lequel le moteur d'entraînement (10) présente un stator (20) avec un agencement de bobines de stator (26) et un rotor (30) avec un arbre de moteur (33) qui est logé de manière rotative au niveau du stator (20) ou par rapport au stator au moyen d'un agencement de palier (47) autour d'un axe de rotation (D), dans lequel le rotor (30) présente un agencement magnétique (37) avec des aimants permanents (38) agencés en anneau autour de l'axe de rotation (D), dans lequel pour la détection d'une position d'angle de rotation respective du rotor (30) par rapport au stator (20), un agencement de capteurs (60) est disposé de manière fixe par rapport au stator (20), qui présente au moins deux capteurs qui sont configurés pour la génération de signaux de commutation numériques (SA, SB, SC) en particulier pour un dispositif d'alimentation électrique (85) pour l'alimentation électrique de l'agencement de bobines de stator (26) de sorte que le rotor (30) puisse être entraîné en rotation pour l'alimentation électrique de l'agencement de bobines de stator (26) autour de l'axe de rotation (D), **caractérisé en ce que** les au moins deux capteurs (67A, 67b, 67C) sont configurés pour la détection de deux ondes déphasées d'un angle de rotation d'un champ magnétique rotatif (FB) du rotor (30), dans lequel les capteurs (67A, 67b, 67C) génèrent les signaux de commutation (SA, SB, SC) en fonction du fait qu'une onde traversant respectivement le capteur (67A, 67b, 67C) du champ magnétique rotatif (FB) dépasse ou n'atteint pas un seuil de commutation (SH, SL) du capteur (67A, 67b, 67C), et **en ce que** les aimants permanents (38) de l'agencement magnétique (37) présentent des distances angulaires les uns par rapport aux autres par rapport à l'axe de rotation (D) de sorte que les ondes du champ magnétique rotatif (FB) à l'emplacement du capteur (67A, 67b, 67C) respectif présentent des demi-ondes (HO, HU) continues, notamment à peu près sinusoïdales avec des zones de crête entre des flancs (AF, DF) croissants et décroissants en continu, dans lequel les ondes présentent des sections de transition (UG) entre des demi-ondes (HO, HU) successives respectivement de différente polarité, dans lequel les ondes présentent dans les sections de transition (UG) au moins un étage (ST) ou un saut ou une discontinuité, et **en ce que** les seuils de commutation (SH, SL) des capteurs (67A, 67b, 67C) sont agencés dans la zone des flancs (AF, DF) croissants ou décroissants en continu des demi-ondes (HO, HU).

2. Moteur d'entraînement selon la revendication 1, **caractérisé en ce que** les aimants permanents (38) de l'agencement magnétique (37) sont prévus et configurés pour entraîner en rotation le rotor (30) en interaction avec l'agencement de bobines de stator (26).

3. Moteur d'entraînement selon la revendication 1 ou 2, **caractérisé en ce qu'**aucun émetteur magnétique prévu exclusivement pour l'actionnement de l'agencement de capteurs (60) et/ou exclusivement les aimants permanents (38) de l'agencement magnétique (37) prévus pour l'entraînement en rotation du rotor (30) en tant que composants à aimant permanent (38) ou aimants permanents (38) sont agencés au niveau du rotor (30).

4. Moteur d'entraînement selon l'une quelconque des revendications précédentes, **caractérisé en ce que** des distances angulaires, en particulier des distances angulaires d'au moins 5°, de préférence d'au moins 10°, en particulier d'au moins 15° par rapport à l'axe de rotation, sont présentes entre des côtés opposés d'aimants permanents (38) contigus de l'agencement magnétique (37).

5. Moteur d'entraînement selon l'une quelconque des revendications précédentes, **caractérisé en ce que** l'agencement magnétique (37), en particulier le rotor (30) dans son ensemble, fait saillie devant le stator (20) en direction de l'agencement de capteurs (60) et/ou **en ce qu'**une distance d'au moins 0,4 mm, en particulier d'au moins 0,8 mm, de préférence d'au moins 1 mm, est prévue entre l'agencement magnétique (37) et l'agencement de capteurs (60).

6. Moteur d'entraînement selon l'une quelconque des revendications précédentes, **caractérisé en ce que** l'agencement de capteurs (60) présente un support de capteur (61), notamment sous forme d'un circuit imprimé (62), au niveau duquel les capteurs (67A, 67b, 67C) sont agencés.

7. Moteur d'entraînement selon la revendication 6, **caractérisé en ce que** le support de capteur (61) est configuré pour le montage au niveau d'un capot de moteur (50) ou entre un capot de moteur (50) et un ensemble de paquets de tôle de stator (21) du stator (20) ou le capot de moteur (50) forme le support de capteur (61) et/ou **en ce que** le support de capteur (61) présente au moins un contour de liaison à complémentarité de formes (63A) pour un montage au niveau du stator (20) ou par rapport au stator (20) de telle manière que le support de capteur (61) par rapport au stator (20) par rapport à l'axe de rotation (D) du moteur d'entraînement (10) ne peut être monté que dans une seule position angulaire ou uniquement dans des positions angulaires, dans lesquelles une distance angulaire prédéterminée est prévue entre chaque capteur (67A, 67b, 67C) de l'agencement de capteurs (60) et une bobine (26A, 26B, 26C) agencée à côté du capteur (67A, 67b, 67C) des bobines de stator.

8. Moteur d'entraînement selon l'une quelconque des revendications précédentes, **caractérisé en ce qu'**au moins un capteur (67A, 67b, 67C) ou chaque capteur (67A, 67b, 67C) de l'agencement de capteurs (60) est agencé respectivement au milieu entre des bobines de stator (27A, 27B, 27C) contiguës ou au milieu par rapport à la bobine de stator (27A, 27B, 27C), à laquelle est associé le capteur (67A, 67b, 67C).

9. Moteur d'entraînement selon l'une quelconque des revendications précédentes, **caractérisé en ce qu'**une onde pleine du champ magnétique rotatif (FB) comprend des demi-ondes (HO, HU) de polarité différente qui passent respectivement par un angle de phase de 180° et **en ce que** les seuils de commutation (SH, SL) sont prévus de telle manière que le signal de commutation (SA, SB, SC) d'un capteur (67A, 67b, 67C) respectif à un angle de phase d'environ 30° après le passage d'une onde du champ magnétique rotatif (FB) d'une demi-onde (HO, HU) d'une polarité à une demi-onde (HO, HU) de l'autre polarité présente un changement de signal de commutation (SW1, SW2).

10. Moteur d'entraînement selon l'une quelconque des revendications précédentes, **caractérisé en ce que** l'angle de phase d'environ 30° et/ou les seuils de commutation (SH, SL) sont réglés au moyen d'une hystérèse magnétique d'un capteur (67A, 67b, 67C) respectif.

11. Moteur d'entraînement (10) selon l'une quelconque des revendications précédentes, **caractérisé en ce que** l'agencement de capteurs (60) est agencé par rapport au stator (20) de telle sorte que les capteurs (67A, 67b, 67C) génèrent les signaux de commutation (SA, SB, SC) dans le cas d'une connexion en triangle de l'agencement de bobines de stator (26) dans le sens d'une commutation neutre, dans lequel il est avantageusement prévu que la commutation neutre soit provoquée par le fait que les seuils de commutation des capteurs (67A, 67b, 67C) soient conçus de sorte que les capteurs (67A, 67b, 67C) émettent un changement de signal de commutation (SW1, SW2) à un angle de phase d'environ 30° avant et/ou après un passage par zéro d'une onde du champ magnétique rotatif (FB).

12. Moteur d'entraînement selon l'une quelconque des revendications précédentes, **caractérisé en ce que** l'agencement de capteurs (60) est agencé par rapport au stator (20) de telle manière que les capteurs (67A, 67b, 67C) génèrent les signaux de commutation (SA, SB, SC) dans le cas d'une connexion en étoile de l'agencement de bobines de stator (26) dans le sens d'une précommutation, dans lequel il est avantageusement prévu que la précommutation corresponde électriquement exactement ou environ à 30°.

13. Moteur d'entraînement selon l'une quelconque des revendications précédentes, **caractérisé en ce que** le dispositif d'alimentation électrique (85) présente un tableau de commutation pour l'agencement de bobines de stator (26) en connexion en triangle et/ou un tableau de commutation pour l'agencement de bobines de stator (26) en connexion en étoile ou est paramétrable au choix avec des tableaux de commutation pour la connexion en triangle et la connexion en étoile.

14. Moteur d'entraînement selon l'une quelconque des revendications précédentes, **caractérisé en ce que** le champ magnétique rotatif (FB) agissant sur les capteurs (67A, 67b, 67C) contient un champ magnétique partiel qui est généré par l'agencement de bobines de stator (26), et un champ magnétique partiel qui est généré par les aimants permanents (38), dans lequel les champs partiels sont en chevauchement l'un sur l'autre.

15. Machine-outil, en particulier machine-outil manuelle (200, 300) ou machine-outil semi-stationnaire, avec un moteur d'entraînement (10) selon l'une quelconque des revendications précédentes et un dispositif d'alimentation électrique (85) pour alimenter électriquement le moteur d'entraînement, dans lequel il est avantageusement prévu que l'agencement de bobines de stator (26) du moteur d'entraînement (10) soit connecté en triangle avec le dispositif d'alimentation électrique (85) et la machine-outil présente un raccord d'alimentation (205) pour le raccordement d'un accumulateur d'énergie électrique à tension continue (206) ou en ce que l'agencement de bobines de stator (26) du moteur d'entraînement (10) est connecté en étoile avec le dispositif d'alimentation électrique (85) et la machine-outil présente un raccord d'alimentation (305) pour un réseau électrique à tension alternative (305).
